# FASCICULE DE BREVET EUROPEEN

(11) **EP 3 013 024 B1**
(45) Date de publication et mention de la délivrance du brevet: **09.08.2017**
(21) Numéro de dépôt: 15189916.8
(22) Date de dépôt: 15.10.2015
(51) Int. Cl.: H04M 3/533, H04M 3/54

(54) **PROCÉDÉ DE REDIRECTION D'UNE COMMUNICATION VERS AU MOINS UN SERVEUR DE DÉPÔT DE MESSAGES**
VERFAHREN ZUR UMLEITUNG EINER KOMMUNIKATION ZU MINDESTENS EINEM SERVER MIT NACHRICHTENDEPOT
METHOD FOR REDIRECTING A CALL TO AT LEAST ONE MESSAGE DEPOT SERVER

(30) Priorité: 23.10.2014 FR 1460192
(43) Date de publication de la demande: 27.04.2016
(73) Titulaire: Orange, 75015 Paris (FR)
(72) Inventeur: MONCOMBLE, Ghislain, 22310 Plestin les Greves (FR); BOUVET, Bertrand, 22700 Perros-Guirec (FR)
(74) Mandataire: Millet, Sandrine

(56) Documents cités:
- EP-B1- 1 118 239
- FR-A1- 2 968 153
- US-A1- 2005 111 649

## Description

### DOMAINE TECHNIQUE

L'invention se rapporte au domaine des télécommunications et concerne en particulier le transfert d'appels vers une messagerie.

### ÉTAT DE L'ART

Le transfert d'appel (ou renvoi d'appel) et la messagerie vocale sont des services de communication très populaires.

Le transfert d'appel est un service permettant de présenter un appel téléphonique vers un second terminal lorsque l'appel n'aboutit pas sur un premier terminal. De manière classique, un utilisateur peut configurer un renvoi d'appel sur une ligne fixe de façon à ce que les appels à destination de cette ligne fixe soient présentés par exemple sur un téléphone mobile. Le renvoi d'appel est transparent pour l'appelant. Le numéro de la ligne vers laquelle renvoyer un appel est configurable par le propriétaire de la ligne sur laquelle est configuré le renvoi. Généralement, cette configuration est réalisée par l'intermédiaire d'un outil de configuration qui peut être un serveur vocal, un serveur web ou encore des combinaisons de touches à saisir sur le terminal lui-même.

De manière classique, lorsqu'un appel présenté sur une ligne particulière n'aboutit pas, l'appel est redirigé vers une messagerie vocale. L'utilisateur appelant peut ainsi déposer un message qui pourra être consulté ultérieurement par le propriétaire de la ligne.

Ces services sont largement répandus et plébiscités par les utilisateurs. Toutefois, l'usage combiné du transfert d'appel et de la messagerie vocale pose des problèmes qui ne sont aujourd'hui que partiellement résolus. En particulier, lorsqu'un appel transféré n'aboutit pas, il est redirigé vers la messagerie vocale associée à la ligne sur laquelle l'appel a été transféré et non pas sur la messagerie vocale associé à la ligne désignée par l'appelant.

La messagerie sur laquelle est redirigé un appel transféré est ainsi sélectionnée automatiquement, en fonction de contraintes techniques, alors que dans de nombreux cas, il serait souhaitable que l'utilisateur destinataire de l'appel puisse sélectionner la messagerie vocale sur laquelle les messages qui lui sont destinés seront déposés.

Le brevet US 8,027,450 B2 décrit un procédé de sélection d'une messagerie vocale suite à un transfert d'appel. Ce procédé propose de sélectionner une boite vocale sur la base de la ligne sur laquelle a été configuré le renvoi et la ligne vers laquelle le renvoi est configuré. Malgré tout l'intérêt que présente cette invention, sa mise en oeuvre nécessite une adaptation du réseau sous-jacent. En particulier, cette solution ne fonctionne pas lorsqu'un abonné d'un premier opérateur de télécommunication dont le réseau est adapté pour mettre en oeuvre ce procédé configure un renvoi vers une ligne hébergée par un second opérateur dont le réseau n'est pas adapté pour mettre en oeuvre le procédé.

Dans EP1118239, le transfert d'appel est autorisé malgré la restriction de transfert d'appel dans le cas où le numéro à utiliser pour ledit transfert satisfait à des conditions fixées au préalable. Le numéro est ainsi comparé avec lesdites conditions et, en fonction des résultats obtenus de cette comparaison, l'appel est, ou n'est pas, transféré. II existe donc un besoin pour une solution permettant de sélectionner une messagerie vers lequel rediriger un appel transféré qui ne demande pas d'adaptation particulière dans le réseau de télécommunication qui héberge la ligne sur laquelle est transférée la communication.

### RÉSUMÉ DE L'INVENTION

À cet effet, la présente invention concerne un procédé de redirection d'une communication vers au moins un serveur de dépôt de messages choisi au préalable, lors du transfert d'une communication en cours d'établissement d'un premier terminal vers un second terminal, le transfert étant réalisé au moyen d'un premier message de signalisation comportant une valeur représentative d'un nombre de transferts de la communication dite champ de renvoi, le procédé étant tel qu'il comporte les étapes suivantes :
- Affectation au champ de renvoi du premier message de signalisation d'une première valeur supérieure ou égale à un seuil, le seuil correspondant à une valeur à partir de laquelle le transfert d'une communication n'est pas autorisé par le réseau,
- Émission du premier message de signalisation vers le second terminal, et
À la réception d'un message indiquant un échec d'établissement de la communication avec le second terminal en réponse au premier message de signalisation :
- Affectation au champ de renvoi d'un second message de signalisation d'une seconde valeur inférieure au seuil, et
- Émission du second message de signalisation vers le au moins un serveur de dépôt choisi.

Dans la description qui suit, les termes « transfert » ou « renvoi » ou encore « redirection » d'une communication sont équivalent et se rapportent en particulier à la phase d'établissement de la communication. Lorsqu'un transfert d'appel est configuré sur une première ligne téléphonique par exemple, les appels non répondus ou refusés sur cette ligne sont redirigés pour être présentés sur une seconde ligne désignée lors de la configuration du transfert.

De manière classique, les standards de télécommunication utilisent un champ de renvoi associé aux messages d'établissement des communications lorsqu'un transfert est configuré sur une ligne. Ce champ est incrémenté lors de chaque transfert d'une ligne vers une autre. En contrôlant la valeur de ce champ lors de chaque transfert, les opérateurs de réseaux de communication peuvent s'assurer que le nombre de transferts d'une communication ne dépasse pas un seuil maximum. En particulier, le contrôle du nombre de transferts d'une communication permet d'éviter un bouclage lorsqu'une première ligne est renvoyée sur une seconde ligne alors même qu'un renvoi est configuré sur la seconde ligne vers la première ligne.

L'envoi du premier message de signalisation comprenant une valeur du champ de renvoi supérieure ou égale à un seuil prédéterminé provoque une erreur lorsque la communication ne peut pas aboutir, par exemple en cas de non réponse ou de refus d'appel. En effet, le champ de renvoi étant positionné à une valeur supérieure ou égale au nombre maximum de transferts autorisé, l'appel ne peut pas être redirigé vers la messagerie associée à la ligne vers laquelle la communication est transférée. Ainsi, à la réception d'une erreur en réponse à la tentative d'établissement de la communication le procédé propose d'émettre un message de signalisation à destination de la messagerie associée à la ligne vers laquelle la communication était destinée avant le transfert, ce message comportant un champ de renvoi dont la valeur est positionnée à une valeur inférieure au nombre maximum de transferts autorisés par le réseau pour une communication.

Le procédé permet ainsi à un utilisateur de sélectionner le serveur de dépôt sur lequel seront enregistrés les messages en cas d'échec d'une communication lorsqu'un transfert de communication a été configuré. De façon particulièrement avantageuse, le procédé ne nécessite pas que le réseau supportant la ligne vers laquelle la communication est transférée soit adapté pour mettre en oeuvre l'invention.

Selon une réalisation particulière, le procédé est tel que le message d'erreur en réponse au premier message de signalisation comprend une indication relative à la cause de l'erreur et que le au moins un serveur de dépôt vers lequel est émis le second message de signalisation est choisi selon la cause de l'erreur.

II est ainsi possible pour un utilisateur de configurer la messagerie sur laquelle sera déposé un message en fonction de la raison pour laquelle une communication n'a pas pu être établie. Par exemple, un correspondant peut être mis en relation avec une première messagerie vocale en cas de non réponse sur la ligne vers laquelle est configuré le renvoi et mis en relation avec une seconde messagerie vocale en cas de rejet de l'appel.

Selon un mode particulier de réalisation le procédé est tel qu'il comporte en outre, lorsque le message indiquant l'échec de l'établissement de la communication avec le second terminal comporte une indication selon laquelle la communication est établie avec un serveur de dépôt de messages, une étape d'émission d'un message d'annulation de la communication à destination du serveur de dépôt de message.

Lorsque le réseau supportant la ligne vers laquelle une communication est redirigée ne prend pas en compte la valeur du champ de renvoi, la communication est établie vers la messagerie associée à cette ligne et un message d'établissement de communication comportant une information indiquant que l'appel est établi avec une messagerie est envoyé. Le procédé propose alors d'émettre un message d'annulation de la communication avec la messagerie avant d'établir une nouvelle communication avec la messagerie choisie lors d'une configuration préalable. De cette façon, le procédé garanti que les messages sont bien déposés sur la messagerie choisie.

Selon un autre aspect, l'invention concerne un dispositif de redirection d'une communication vers au moins un serveur de dépôt de messages choisi au préalable, lors du transfert d'une communication en cours d'établissement d'un premier terminal vers un second terminal, le transfert étant réalisé au moyen d'un premier message de signalisation comportant une valeur représentative d'un nombre de transferts de la communication dite champ de renvoi, le dispositif étant caractérisé en ce qu'il comporte:
- Un compteur adapté pour affecter une première valeur supérieure ou égale à un seuil au champ de renvoi du premier message de signalisation, le seuil correspondant à une valeur à partir de laquelle le transfert d'une communication n'est pas autorisé par le réseau,
- Un module de communication apte à émettre le premier message de signalisation vers le second terminal,
le compteur et le module de communication étant mis en oeuvre à la réception d'un message indiquant un échec d'établissement de la communication avec le second terminal en réponse au premier message de signalisation pour:
- Affecter une seconde valeur inférieure au seuil prédéterminé à un champ de renvoi d'un second message de signalisation, et
- Émettre le second message de signalisation vers le au moins un serveur de dépôt choisi.

L'invention se rapporte également à un terminal caractérisé en ce qu'il comporte un dispositif de redirection tel que décrit ci-dessus.

L'invention concerne aussi un serveur caractérisé en ce qu'il comporte un dispositif de redirection tel que décrit ci-dessus.

L'invention se rapporte également à un programme d'ordinateur comportant des instructions pour l'exécution du procédé de redirection, lorsque le programme est exécuté par un processeur.

L'invention concerne aussi un support de stockage lisible par un ordinateur sur lequel est enregistré un programme d'ordinateur comprenant des instructions pour l'exécution des étapes du procédé de redirection.

Les terminaux, serveurs, dispositifs, programmes et supports de stockage présentent des avantages analogues à ceux du procédé correspondant décrit ci-dessus.

### LISTE DES FIGURES

D'autres avantages et caractéristiques de l'invention apparaîtront plus clairement à la lecture de la description suivante d'un mode de réalisation particulier de l'invention, donné à titre d'exemple illustratif et non limitatif, et des dessins annexés, parmi lesquels :
- La figure 1 illustre une architecture simplifiée d'un réseau de télécommunications adapté pour mettre en oeuvre l'invention selon une réalisation particulière,
- La figure 2 illustre les principales étapes du procédé de redirection selon un mode particulier de réalisation,
- La figure 3 illustre un chronogramme sur lequel sont représentés des messages pouvant être échangés dans une mise en oeuvre particulière de l'invention.
- La figure 4 illustre une architecture simplifiée d'un dispositif adapté pour la mise en oeuvre du procédé de redirection selon une réalisation particulière

### DESCRIPTION DÉTAILLÉE

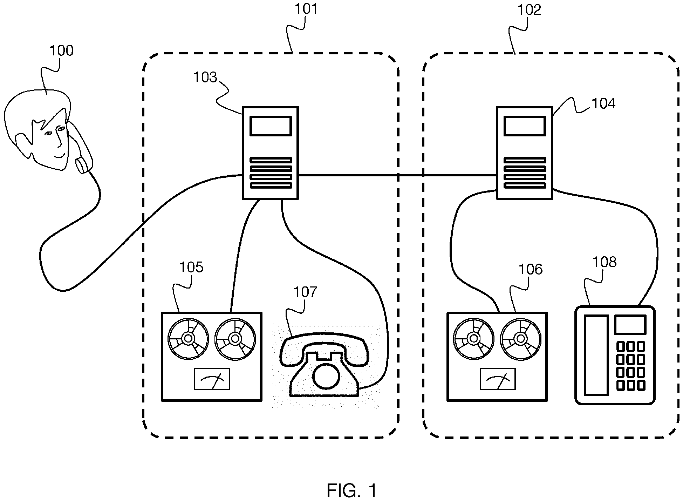

**La** **figure 1** représente deux réseaux de télécommunication 101 et 102 appartenant par exemple à des opérateurs distincts et comprenant respectivement des serveurs d'application 103 et 104 prenant en charge les communications au sein du réseau auquel ils appartiennent.

La représentation des réseaux 101 et 102 est volontairement simplifiée afin de faciliter la compréhension de l'invention. Toutefois, un homme du métier sait que les réseaux de télécommunications peuvent comprendre de nombreux équipements et que la mise en oeuvre de l'invention dans des conditions réelles de production peut nécessiter une répartition des fonctions sur différents équipements. Bien que cette description se base sur l'exemple d'un transfert de communication téléphonique, l'invention peut s'appliquer à d'autres types de communications, comme par exemple une communication de type messagerie instantanée dans lequel des serveurs dit « store and forward » sont adaptés pour mémoriser des messages reçus hors connexion.

Dans cet exemple de réalisation, les réseaux 101 et 102 sont des réseaux de télécommunication de type IMS (IP Multimedia Subsystem) distincts et comprennent, outre les serveurs d'applications 103 et 104, des serveurs de dépôt de messages 105 et 106 adaptés pour enregistrer et mémoriser des messages vocaux à destination d'abonnés au réseau. Il s'agit par exemple de serveurs de type messageries vocales permettant à des correspondants de déposer des messages vocaux à destination d'un abonné au réseau lorsqu'un appel n'aboutit pas parce que l'abonné est absent ou que la ligne est occupée par exemple.

Ainsi, lorsqu'un utilisateur 100 passe un appel téléphonique à destination d'un abonné 107 du réseau 101 et que ce dernier ne répond pas, le serveur d'application 103 peut annuler la présentation de l'appel et rediriger la communication vers une boite vocale associée à l'abonné 107 hébergée sur le serveur de messagerie 105. L'utilisateur 100 peut ainsi enregistrer un message qui sera consulté ultérieurement par l'abonné 107. Cette redirection de la communication vers la messagerie peut être effectuée de manière classique au sein d'un réseau IMS par l'envoi d'un message SIP (Session Initiation Protocol) de type CANCEL vers le poste de l'abonné 107 puis d'un message de type INVITE émis à destination du serveur de messagerie 105.

Outre le renvoi de communications vers le serveur de messagerie 105, le serveur 103 supporte un service de type renvoi d'appel offrant la possibilité aux abonnés du réseau 101 de renvoyer des appels vers une autre ligne. Par exemple, le titulaire de la ligne 107 peut configurer un renvoi sur non réponse vers la ligne 108. Ainsi, lorsqu'un utilisateur 100 passe un appel téléphonique à destination d'un abonné 107 du réseau 101 et que ce dernier ne répond pas, le serveur d'application 103 peut annuler la présentation de l'appel sur la ligne 107 et présenter l'appel sur la ligne 108. Le renvoi est configuré de manière classique par l'intermédiaire d'une interface de configuration accessible depuis le réseau Internet ou un serveur vocal par exemple. Dans cet exemple, bien que la ligne vers laquelle est configuré le renvoi puisse aussi être opérée par le même opérateur que la ligne 107, elle appartient ici à un réseau de télécommunication 102 opéré par un opérateur distinct de l'opérateur du réseau 101.

Lorsque l'appel est ainsi transféré vers la ligne 108 et que le correspondant ne répond pas, le serveur d'application 104 redirige l'appel de manière classique vers le serveur de dépôt de message 106 du réseau 102 afin que l'appelant puisse laisser un message. L'appelant est alors invité à déposer un message sur la messagerie associée à la ligne 108 alors qu'il cherchait à joindre la ligne 107.

L'invention cherche à éviter cette redirection automatique vers la messagerie 106 pour permettre une redirection vers la messagerie 105 sans avoir à modifier les éléments du réseau 102.

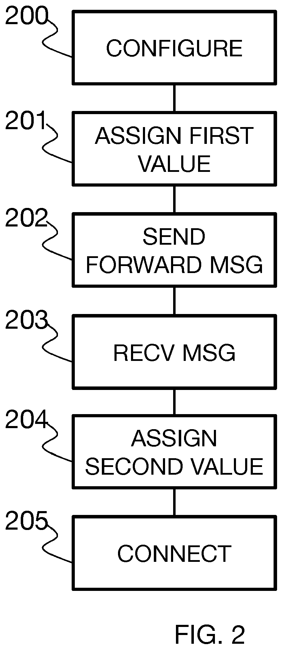

**La** **figure 2** illustre les principales étapes du procédé de redirection d'une communication vers un serveur de dépôt de message choisi au préalable. Lors d'une étape préalable 200, un utilisateur de la ligne 107 configure un renvoi d'appel de façon à ce que les appels présentés sur la ligne 107 soient automatiquement transférés sur la ligne 108, le renvoi ainsi configuré pouvant être ou non conditionnel. Pour cela, l'utilisateur de la ligne 107 se connecte par exemple à un portail web associé à la ligne pour saisir les coordonnées d'une seconde ligne vers laquelle rediriger les appels entrants. D'autres moyens de configuration peuvent également être mis en oeuvre pour réaliser la configuration, comme par exemple un service vocal, une interface intégrée au terminal ou encore une combinaison de touches pressées successivement sur le clavier du terminal. Selon une réalisation particulière, ces moyens de configuration permettent en outre de sélectionner une messagerie vocale vers laquelle rediriger les appels en cas de non réponse sur la ligne transférée. Il peut s'agir par exemple d'une option de configuration invitant l'utilisateur à désigner la messagerie de la ligne 107 ou la messagerie associée à la ligne 108 lorsqu'une communication n'aboutit pas sur la ligne 108. Selon un mode de réalisation particulier, une messagerie est choisie en association avec une raison de non-établissement d'une communication. De cette façon, l'utilisateur peut configurer par exemple un renvoi vers la messagerie 105 en cas de non réponse sur la ligne 108 et un renvoi vers la messagerie 106 en cas de rejet délibéré d'un appel sur cette même ligne. Selon une réalisation particulière, l'étape de configuration permet la désignation de plusieurs messageries sur lesquelles sont enregistrés les messages simultanément. Par exemple, un utilisateur peut sélectionner la messagerie de la ligne 107 et la messagerie de la ligne 108 de façon à ce qu'en cas de non réponse, un message vocal puisse être enregistré sur les deux messageries simultanément. À la fin de l'étape de configuration, les informations relatives à la désignation d'au moins un serveur de dépôt de message sont enregistrées et mémorisées, par exemple dans une mémoire du serveur 103.

Ces informations mémorisées correspondent à un identifiant du serveur de messagerie et permettent d'établir une communication avec le serveur. Il peut s'agir par exemple d'une adresse IP, d'une numéro de téléphone, d'une URL et/ou d'un code d'identification d'un abonné.

L'étape 201 se rapporte à la préparation d'un message de signalisation apte à rediriger la communication vers une autre ligne lorsqu'une communication ne peut pas être établie sur la première ligne. Le message de signalisation comporte un champ de renvoi, permettant de comptabiliser le nombre de renvois successifs pour une communication. L'étape 201 comporte en particulier l'affectation d'une première valeur supérieure ou égale à un seuil à ce champ de renvoi, le seuil correspondant à une valeur à partir de laquelle le transfert d'une communication n'est pas autorisé par le réseau. Par exemple, dans le cas d'un réseau IMS, il peut s'agir d'un message INVITE comportant un champ « diversion » dans lequel un champ de renvoi est positionné à une valeur supérieure ou égale au nombre maximum de renvoi autorisés par le réseau. Selon un mode particulier de réalisation de l'invention, cette première valeur prédéterminée est égale à 5. Dans le cas d'un réseau RTC, le protocole SS7 (Signaling System 7) prévoit également l'utilisation d'un compteur de redirection. Les normes ITU et ANSI prévoient une valeur maximale de 5 pour ce compteur, ce qui en fait une valeur particulièrement intéressante pour l'invention. Ainsi, en positionnant la valeur du compteur à une valeur de 5 sur un réseau mettant en oeuvre le protocole SS7, on a la garantie que l'appel ne pourra pas être redirigé.

Une étape 202 concerne l'émission du message de signalisation préparé à l'étape 201 vers le second terminal de façon à provoquer le transfert de l'appel vers une ligne désignée par l'utilisateur lors de la configuration du renvoi.

Une étape 203 se rapporte à la réception d'un message indiquant un échec d'établissement de la communication avec le second terminal en réponse au message de signalisation émis à l'étape précédente. Par exemple, dans un réseau de type IMS, un message d'erreur est envoyé en réponse à une requête de mise en relation de type INVITE lorsque l'appel ne peut aboutir. Par exemple, en cas de rejet d'un appel par le correspondant ou d'occupation de la ligne, l'appelant peut recevoir respectivement des réponses « 603 - decline » ou « 486 - Busy here ». Ces messages indiquent que l'appel n'a pas pu aboutir et précisent la raison de l'échec. D'autres codes d'erreur peuvent être retournés selon les circonstances. D'une manière générale, on entend ici par message d'erreur la réception d'une information relative à un échec d'établissement de la communication avec le correspondant.

Le message indiquant l'échec de l'établissement de la communication peut être un message confirmant l'établissement de la communication avec une messagerie vocale. Par exemple, lorsqu'un renvoi d'appel est configuré vers une ligne appartenant à un réseau de télécommunication ne prenant pas en compte le champ de renvoi renseigné dans le message de signalisation initial, la communication peut être redirigée vers le serveur de messagerie associé à la ligne vers laquelle est renvoyée la communication. Dans le cas d'un réseau IMS, ce message de confirmation est une réponse de type « 200 - OK » au message INVITE d'établissement de la communication et comporte une indication relative au fait que la communication est établie avec un équipement réseau automatique tel un serveur de messagerie. Cette indication est par exemple un paramètre « automata » tel que défini dans le standard IETF RFC 3840. Selon un mode de réalisation particulier, lorsqu'un tel message est reçu à l'étape 203 et que la configuration réalisée à l'étape 200 désigne une messagerie autre que la messagerie associée à la ligne vers laquelle est configuré le renvoi, la communication avec le serveur de messagerie est terminée par l'envoi d'un message apte à annuler l'établissement de la communication. Par exemple, dans le cas d'un réseau de type IMS, un message de type CANCEL peut être envoyé au serveur pour annuler l'établissement de la communication.

L'étape 204 concerne la préparation d'un message de signalisation apte à rediriger la communication vers une messagerie lorsqu'une communication ne peut pas être établie sur la ligne vers laquelle la communication a été redirigée. La préparation du message consiste en particulier à affecter à un champ de renvoi une valeur inférieure à un seuil prédéterminé à partir duquel les renvois ne sont pas autorisés par le réseau. Par exemple, cette étape peut consister dans un réseau de type IMS à affecter la valeur 1 au champ de renvoi dans un champ « diversion » d'un message INVITE.

À une étape 205, le message de signalisation préparé à l'étape 204 est émis vers au moins un serveur de dépôt de message associé à la ligne sur laquelle a été configuré le renvoi. Selon une réalisation particulière, cette étape comprend l'obtention préalable d'un identifiant du au moins un serveur de messagerie mémorisé lors de l'étape préalable de configuration du renvoi telle que décrite à l'étape 200.

Selon une réalisation particulière, lorsqu'une information relative à la cause du non établissement de la communication est indiquée dans le message d'erreur reçu à l'étape 203, celle-ci peut est utilisée pour sélectionner le serveur de dépôt de message vers lequel rediriger la communication. Par exemple, l'utilisateur peut avoir choisi, lors de l'étape de configuration 200, un premier serveur de dépôt de messages associé à une première cause de non établissement de la communication (par exemple un rejet d'appel) et un second serveur associé à une seconde cause de non établissement de la communication (comme une occupation de la ligne). Ainsi, dans le cas d'un réseau IMS, à la réception d'un message d'erreur de type « 603 - decline », c'est l'identifiant du premier serveur de dépôt qui est utilisé pour émettre le message alors qu'à la réception d'un message du type « 486 - Busy here », c'est l'identifiant du second serveur de dépôt qui est utilisé.

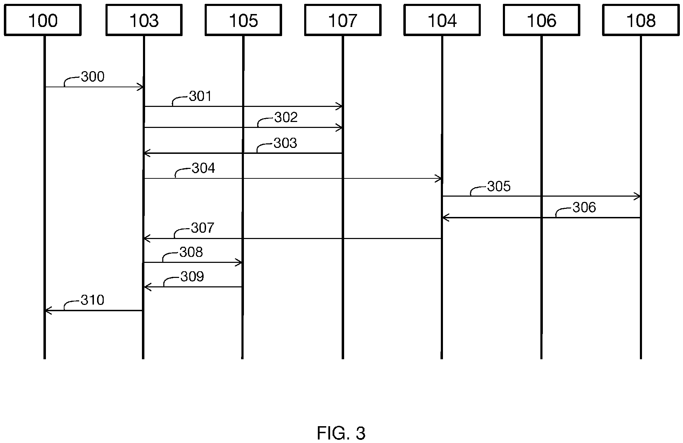

On se rapporte maintenant à **la** **figure 3** qui représente un chronogramme sur lequel sont illustrés des messages pouvant être échangés entre les différentes entités décrites en référence à la figure 1 pour mettre en oeuvre le procédé. Par soucis de clarté, seuls les messages nécessaires à une bonne compréhension de l'invention sont représentés mais l'homme du métier sait qu'une mise en oeuvre dans un environnement réel peut nécessiter des échanges de messages supplémentaires.

Lorsque l'utilisateur 100 initie une communication vers la ligne 107, un premier message 300 est émis à destination du serveur d'application 103. Il s'agit par exemple d'une message SIP de type INVITE comportant de manière classique les coordonnées de l'appelant et de l'appelé et des informations décrivant des caractéristiques de la communication souhaitée. Ce message est traité par le serveur d'application qui réémet un message INVITE correspondant 301 vers le terminal associé à la ligne 107, provoquant ainsi la présentation de l'appel sur le terminal.

À l'expiration d'une période prédéterminée, le serveur d'application annule la présentation de l'appel sur la ligne 107 en émettant par exemple un message SIP 302 de type CANCEL, 30 secondes après le début de présentation de l'appel. Le terminal associé à la ligne 107 émet alors un message 303 à destination du serveur d'application confirmant la fin de la présentation de l'appel. Il peut s'agir par exemple d'une réponse SIP « 487 - Request terminated » au message CANCEL.

A ce stade, lorsque la présentation de l'appel a cessé sur le terminal associé à la ligne 107 et que le serveur d'application en a été informé, ce dernier peut consulter la configuration relative aux renvois d'appel sur la ligne 107, effectuée et mémorisée au préalable lors de l'étape 200. Ainsi, lorsqu'un transfert d'appel a été configuré sur la ligne 107 et que le serveur de dépôt de messages choisi lors de la configuration préalable est la messagerie vocale associée à la ligne 107, le serveur d'application prépare un message de signalisation apte à rediriger la communication sur le terminal associé à la ligne 108. Il peut s'agir par exemple d'un message SIP de type INVITE indiquant les coordonnées de l'appelant 100 et les coordonnées de la ligne de destination 108 et comportant un champ « diversion » tel que décrit dans le standard IETF RFC 5806, indiquant les coordonnées de la ligne renvoyée 107 et un champ de renvoi.

Selon une réalisation particulière de l'invention, le serveur d'application affecte au champ de renvoi dans le message de signalisation une première valeur supérieure ou égale à un seuil, le seuil correspondant à une valeur à partir de laquelle le transfert d'une communication n'est pas autorisé par le réseau. De manière classique, afin de prévenir des bouclages provoqués par des renvois circulaires, les opérateurs réseaux fixent souvent le seuil prédéterminé à 2. Dans cet exemple, le serveur d'application positionne une valeur largement supérieure au seuil prédéterminé, comme par exemple une valeur de 5 qui est la valeur maximum admise par le protocole SS7.

A l'étape 202, le message de signalisation préparé à l'étape 201 et contenant un champ de renvoi dont la valeur est apte à interdire des renvois ultérieurs de la communication est émis à destination de la ligne 108. Il peut s'agir par exemple du message 304 représenté sur la figure 3. Le message peut être intercepté par au moins un équipement intermédiaire, comme par exemple le serveur d'application 104 du réseau 102 et réémis sous la forme d'un message 305 vers le terminal associé à la ligne 108. Le terminal associé à la ligne 108 peut alors présenter l'appel qui était initialement destiné à la ligne 107.

En cas de non réponse à l'appel sur le terminal associé à la ligne 108, par exemple si le correspondant rejette l'appel, un message d'erreur noté 306 sur la figure 3 peut être envoyé par le terminal en réponse au message de signalisation 305 et être reçu par le serveur d'application 104. Il peut s'agir par exemple d'une réponse SIP « 603 - Décliné » au message INVITE utilisé pour établir la communication. La valeur du champ de renvoi ayant été positionné par le serveur d'application 103 à une valeur incompatible avec un renvoi supplémentaire, le serveur d'application 104 ne peut pas rediriger l'appel de manière classique vers le serveur de messagerie 106. Le serveur d'application 104 réémet alors le message d'erreur vers le serveur d'application 103 sous la forme d'un message 307 comportant une indication de non réponse du correspondant. Ce message 307 peut être par exemple une réponse SIP « 603 - Décliné » au message INVITE 304 émis par le serveur 103 vers le serveur 104.

À la réception lors d'une étape 203 du message 307 indiquant une non réponse du correspondant vers lequel l'appel a été transféré, le serveur 103 consulte la configuration enregistrée à l'étape 200 lors de la mise en place du transfert d'appel sur la ligne 107 pour identifier la messagerie vers laquelle rediriger la communication. Le serveur d'application 103 prépare alors un message de signalisation 308 adapté pour rediriger la communication vers la messagerie choisie dans la configuration, comme par exemple la messagerie associée à la ligne 107. Le message peut par exemple être préparé à partir du message 304 en modifiant les coordonnées du destinataire de façon à ce qu'il désigne le serveur de messagerie 105. Il peut s'agir par exemple d'un message SIP de type INVITE comportant un champ « diversion » tel que défini dans la RFC 5806. Lors de cette étape, le serveur d'application 103 affecte une nouvelle valeur au champ de renvoi compris dans le message, cette nouvelle valeur étant inférieure au seuil prédéterminé à partir duquel le réseau n'autorise pas la redirection de communications. Par exemple, dans le cas d'un réseau d'opérateur dans lequel un maximum de 2 redirections d'appels sont autorisés pour une même communication, le serveur peut affecter une valeur égale à 1 au champ de renvoi de façon à autoriser une redirection vers une autre destination, et en particulier vers la messagerie 105.

Ce second message de signalisation 308 est alors envoyé vers le serveur de messagerie 105 à l'étape 205 afin que l'appelant 100 soit mis en relation avec la messagerie 105 associée à la ligne 107 pour y enregistrer un message. Lorsque le serveur de messagerie 105 accepte la communication, des messages de confirmation 309 et 310, comme par exemple des réponses SIP « 200 - OK », sont transmis vers le terminal de l'utilisateur 100 pour finaliser la mise en relation.

Ainsi, le procédé selon l'invention mis en oeuvre sur le serveur d'application 103 permet de mettre un appelant 100 en relation avec un serveur de dépôt de messages 105 associé à une première ligne 107 d'un premier réseau d'opérateur 101 lorsqu'un appel redirigé vers une seconde ligne 108 d'un second réseau d'opérateur 102 ne peut pas aboutir. Le procédé est particulièrement avantageux car l'opérateur du réseau 101 peut offrir à ses abonnés la possibilité de choisir la messagerie vers laquelle rediriger des communications lors d'un transfert d'appel même lorsque l'appel est transféré vers un réseau opéré par un tiers et n'offrant pas ce même service.

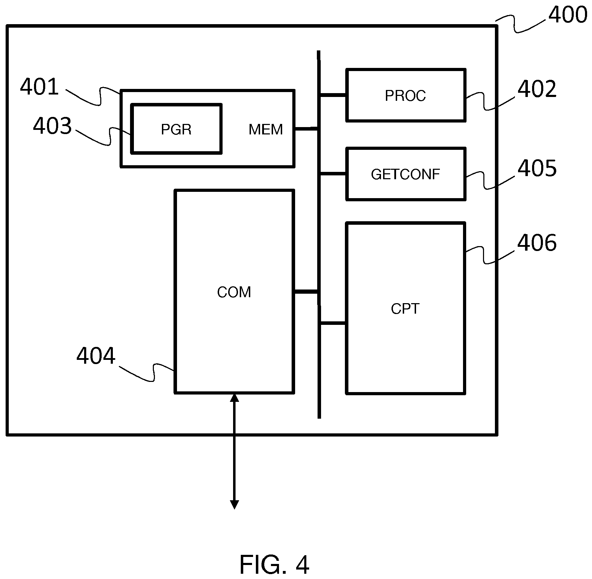

**La** **figure 4** illustre de manière simplifiée l'architecture d'un dispositif 400 adapté pour mettre en oeuvre l'invention. Le dispositif comprend un espace de stockage 401, par exemple une mémoire MEM, une unité de traitement 402 équipée par exemple d'un processeur PROC. L'unité de traitement peut être pilotée par un programme 403, par exemple un programme d'ordinateur PGR, mettant en oeuvre le procédé de redirection tel que décrit dans l'invention en référence à la figure 2, et notamment les étapes d'affectation au champ de renvoi du premier message de signalisation d'une première valeur supérieure ou égale à un seuil, le seuil correspondant à une valeur à partir de laquelle le transfert d'une communication n'est pas autorisé par le réseau, d'émission du premier message de signalisation vers le second terminal, et à la réception d'un message indiquant un échec d'établissement de la communication avec le second terminal en réponse au premier message de signalisation, d'affectation au champ de renvoi d'un second message de signalisation d'une seconde valeur inférieure au seuil, et d'émission du second message de signalisation vers le au moins un serveur de dépôt choisi lors d'une étape préalable de configuration.

À l'initialisation, les instructions du programme d'ordinateur 403 sont par exemple chargées dans une mémoire RAM (Random Access Memory en anglais) avant d'être exécutées par le processeur de l'unité de traitement 402. Le processeur de l'unité de traitement 402 met en oeuvre les étapes du procédé de redirection selon les instructions du programme d'ordinateur 403.

Pour cela, le dispositif comprend, outre la mémoire 401, un module de communication 404 (COM) permettant au dispositif de se connecter à un réseau de communication et d'échanger des données avec d'autres dispositifs par l'intermédiaire de ce réseau de télécommunications, et par exemple d'obtenir, auprès d'une base de données, un identifiant de serveur de dépôt de message, d'émettre et de recevoir des messages de signalisation pour l'établissement et le transfert de communications. En particulier, le module de communication est apte à émettre un premier message de signalisation vers un terminal, recevoir un message indiquant un échec d'établissement de la communication et à émettre un second message de signalisation vers au moins un serveur de dépôt de messages choisi au préalable. Ce module de communication peut par exemple être une interface réseau de type WIFI ou Ethernet. Le dispositif comprend également un module d'obtention 405 (GETCONF) d'une configuration d'un renvoi de communication réalisée au préalable, le module permettant notamment d'obtenir un identifiant d'un moins serveur de dépôt de messages choisi au préalable. Ce module peut être par exemple un client http adapté pour faire une requête vers une base de données de stockage de la configuration. Le dispositif comprend aussi un compteur 406 (CPT) adapté pour affecter une première valeur supérieure ou égale à un seuil au champ de renvoi du premier message de signalisation, et à affecter une seconde valeur inférieure au seuil prédéterminé à un champ de renvoi d'un second message de signalisation, le seuil correspondant à une valeur à partir de laquelle le transfert d'une communication n'est pas autorisé par le réseau. Ce module sert notamment à préparer des messages de signalisation permettant de commander le renvoi d'une communication vers une autre ligne.

Selon un mode de réalisation particulier, le dispositif peut être intégré dans un serveur d'application d'un réseau de télécommunication ou un terminal, et de manière générale dans n'importe quel équipement connecté à un réseau de communication adapté pour recevoir et émettre des messages de signalisation de communications.

## Revendications

1. Procédé de redirection d'une communication vers au moins un serveur de dépôt de messages choisi au préalable, lors du transfert d'une communication en cours d'établissement d'un premier terminal vers un second terminal, le transfert étant réalisé au moyen d'un premier message de signalisation comportant une valeur représentative d'un nombre de transferts de la communication dite champ de renvoi, le procédé étant **caractérisé en ce qu'**il comporte les étapes suivantes :
- Affectation au champ de renvoi du premier message de signalisation d'une première valeur supérieure ou égale à un seuil, le seuil correspondant à une valeur à partir de laquelle le transfert d'une communication n'est pas autorisé par le réseau,
- Émission du premier message de signalisation vers le second terminal, et
À la réception d'un message indiquant un échec d'établissement de la communication avec le second terminal en réponse au premier message de signalisation :
- Affectation au champ de renvoi d'un second message de signalisation d'une seconde valeur inférieure au seuil, et
- Émission du second message de signalisation vers le au moins un serveur de dépôt choisi.

2. Procédé selon la revendication 1 **caractérisé en ce que** le message indiquant un échec d'établissement de la communication en réponse au premier message de signalisation comprend une indication relative à la cause de l'erreur et **en ce que** le au moins un serveur de dépôt vers lequel est émis le second message de signalisation est choisi selon la cause de l'erreur.

3. Procédé selon l'une quelconque des revendications 1 ou 2 **caractérisé en ce qu'**il comporte en outre, lorsque le message indiquant l'échec de l'établissement de la communication avec le second terminal comporte une indication selon laquelle la communication est établie avec un serveur de dépôt de messages, une étape d'émission d'un message d'annulation de la communication à destination du serveur de dépôt de message.

4. Dispositif de redirection d'une communication vers au moins un serveur de dépôt de messages choisi au préalable, lors du transfert d'une communication en cours d'établissement d'un premier terminal vers un second terminal, le transfert étant réalisé au moyen d'un premier message de signalisation comportant une valeur représentative d'un nombre de transferts de la communication dite champ de renvoi, le dispositif étant **caractérisé en ce qu'**il comporte:
- Un compteur adapté pour affecter une première valeur supérieure ou égale à un seuil au champ de renvoi du premier message de signalisation, le seuil correspondant à une valeur à partir de laquelle le transfert d'une communication n'est pas autorisé par le réseau,
- Un module de communication apte à émettre le premier message de signalisation vers le second terminal, le compteur et le module de communication étant mis en oeuvre à la réception d'un message indiquant un échec d'établissement de la communication avec le second terminal en réponse au premier message de signalisation pour:
- Affecter une seconde valeur inférieure au seuil prédéterminé à un champ de renvoi d'un second message de signalisation, et
- Émettre le second message de signalisation vers le au moins un serveur de dépôt choisi.

5. Terminal **caractérisé en ce qu'**il comporte un dispositif de redirection selon la revendication 4.

6. Serveur **caractérisé en ce qu'**il comporte un dispositif de redirection selon la revendication 4.

7. Programme d'ordinateur comportant des instructions pour l'exécution du procédé de redirection selon l'une quelconque des revendications 1 à 3, lorsque le programme est exécuté par un processeur.

8. Support de stockage lisible par un ordinateur sur lequel est enregistré un programme d'ordinateur comprenant des instructions pour l'exécution des étapes du procédé de redirection selon l'une des revendications 1 à 3.

## Patentansprüche

1. Verfahren zur Umleitung eine Kommunikation zu wenigstens einem zuvor gewählten Server mit Nachrichtendepot während der Weiterleitung einer im Aufbau befindlichen Kommunikation von einem ersten Endgerät zu einem zweiten Endgerät, wobei die Weiterleitung mittels einer ersten Signalisierungsnachricht durchgeführt wird, die einen für eine Anzahl von Weiterleitungen der Kommunikation repräsentativen Wert umfasst, "Umleitungsfeld" genannt, wobei das Verfahren **dadurch gekennzeichnet ist, dass** es die folgenden Schritte umfasst:
- Zuweisen eines ersten Wertes, der größer als ein oder gleich einem Schwellenwert ist, zu dem Umleitungsfeld der ersten Signalisierungsnachricht, wobei der Schwellenwert einem Wert entspricht, von dem ab die Weiterleitung einer Kommunikation nicht von dem Netz genehmigt wird,
- Senden der ersten Signalisierungsnachricht an das zweite Endgerät, und
beim Empfang einer Nachricht, die einen Fehlschlag des Aufbaus der Kommunikation mit dem zweiten Endgerät in Reaktion auf die erste Signalisierungsnachricht angibt:
- Zuweisen eines zweiten Wertes, der kleiner als der Schwellenwert ist, zu dem Umleitungsfeld einer zweiten Signalisierungsnachricht, und
- Senden der zweiten Signalisierungsnachricht an den wenigstens einen gewählten Server mit Depot.

2. Verfahren nach Anspruch 1, **dadurch gekennzeichnet, dass** die Nachricht, die einen Fehlschlag des Aufbaus der Kommunikation in Reaktion auf die erste Signalisierungsnachricht angibt, eine Angabe bezüglich der Ursache des Fehlers umfasst, und dadurch, dass der wenigstens eine Server mit Depot, an den die zweite Signalisierungsnachricht gesendet wird, in Abhängigkeit von der Ursache des Fehlers gewählt wird.

3. Verfahren nach einem der Ansprüche 1 oder 2, **dadurch gekennzeichnet, dass** es außerdem, wenn die Nachricht, die den Fehlschlag des Aufbaus der Kommunikation mit dem zweiten Endgerät angibt, eine Angabe umfasst, gemäß der die Kommunikation mit einem Server mit Nachrichtendepot hergestellt wird, einen Schritt des Sendens einer Nachricht zur Annullierung der Kommunikation an den Server mit Nachrichtendepot umfasst.

4. Vorrichtung zur Umleitung eine Kommunikation zu wenigstens einem zuvor gewählten Server mit Nachrichtendepot während der Weiterleitung einer im Aufbau befindlichen Kommunikation von einem ersten Endgerät zu einem zweiten Endgerät, wobei die Weiterleitung mittels einer ersten Signalisierungsnachricht durchgeführt wird, die einen für eine Anzahl von Weiterleitungen der Kommunikation repräsentativen Wert umfasst, "Umleitungsfeld" genannt, wobei die Vorrichtung **dadurch gekennzeichnet ist, dass** sie umfasst:
- einen Zähler, der dafür ausgelegt ist, einen ersten Wert, der größer als ein oder gleich einem Schwellenwert ist, dem Umleitungsfeld der ersten Signalisierungsnachricht zuzuweisen, wobei der Schwellenwert einem Wert entspricht, von dem ab die Weiterleitung einer Kommunikation nicht von dem Netz genehmigt wird,
- ein Kommunikationsmodul, das geeignet ist, die erste Signalisierungsnachricht an das zweite Endgerät zu senden, wobei der Zähler und das Kommunikationsmodul beim Empfang einer Nachricht eingesetzt werden, die einen Fehlschlag des Aufbaus der Kommunikation mit dem zweiten Endgerät in Reaktion auf die erste Signalisierungsnachricht angibt, um:
- einen zweiten Wert, der kleiner als der vorbestimmte Schwellenwert ist, einem Umleitungsfeld einer zweiten Signalisierungsnachricht zuzuweisen, und
- die zweite Signalisierungsnachricht an den wenigstens einen gewählten Server mit Depot zu senden.

5. Endgerät, **dadurch gekennzeichnet, dass** es eine Vorrichtung zur Umleitung nach Anspruch 4 aufweist.

6. Server, **dadurch gekennzeichnet, dass** er eine Vorrichtung zur Umleitung nach Anspruch 4 aufweist.

7. Computerprogramm, welches Anweisungen zur Ausführung des Verfahrens zur Umleitung nach einem der Ansprüche 1 bis 3, wenn das Programm von einem Prozessor ausgeführt wird, umfasst.

8. Computerlesbarer Datenträger, auf dem ein Computerprogramm aufgezeichnet ist, welches Anweisungen zur Ausführung der Schritte des Verfahrens zur Umleitung nach einem der Ansprüche 1 bis 3 umfasst.

## Claims

1. Method for redirecting a call to at least one message deposit server chosen beforehand, when a call being set up is being transferred from a first terminal to a second terminal, the transfer being carried out by means of a first signaling message containing a value representative of a number of transfers of the call, referred to as the "forwarding field", the method being **characterized in that** it includes the following steps:
- assigning to the forwarding field of the first signaling message a first value greater than or equal to a threshold, the threshold corresponding to a value starting from which the transfer of a call is not allowed by the network,
- transmitting the first signaling message to the second terminal, and
upon receiving a message indicating a failure to set up the call with the second terminal in response to the first signaling message:
- assigning to the forwarding field of a second signaling message a second value less than the threshold, and
- transmitting the second signaling message to the at least one chosen deposit server.

2. Method according to Claim 1, **characterized in that** the message indicating a failure to set up the call in response to the first signaling message contains an indication relating to the cause of the error and **in that** the at least one deposit server to which the second signaling message is transmitted is chosen according to the cause of the error.

3. Method according to either Claim 1 or Claim 2, **characterized in that** it additionally includes, when the message indicating the failure to set up the call with the second terminal contains an indication according to which the call is set up with a message deposit server, a step for transmitting a message for canceling the call intended for the message deposit server.

4. Device for redirecting a call to at least one message deposit server chosen beforehand, when a call being set up is being transferred from a first terminal to a second terminal, the transfer being carried out by means of a first signaling message containing a value representative of a number of transfers of the call, referred to as the "forwarding field", the device being **characterized in that** it includes:
- a counter suitable for assigning a first value greater than or equal to a threshold to the forwarding field of the first signaling message, the threshold corresponding to a value starting from which the transfer of a call is not allowed by the network,
- a communication module suitable for transmitting the first signaling message to the second terminal, the counter and the communication module being operated upon receiving a message indicating a failure to set up the call with the second terminal in response to the first signaling message in order to:
- assign a second value less than the predetermined threshold to a forwarding field of a second signaling message, and
- transmit the second signaling message to the at least one chosen deposit server.

5. Terminal **characterized in that** it includes a redirection device according to Claim 4.

6. Server **characterized in that** it includes a redirection device according to Claim 4.

7. Computer program including instructions for executing the redirection method according to any one of Claims 1 to 3, when the program is executed by a processor.

8. Storage medium readable by a computer on which there is recorded a computer program comprising instructions for executing the steps of the redirection method according to one of Claims 1 to 3.
